# EUROPÄISCHE PATENTSCHRIFT

(11) **EP 0 926 211 B1**
(45) Veröffentlichungstag und Bekanntmachung des Hinweises auf die Patenterteilung: **13.08.2003**
(21) Anmeldenummer: 98122310.0
(22) Anmeldetag: 24.11.1998
(51) Int. Cl.: C09D 11/00

(54) **Pigmentierte Inkjet-Tinte mit verbesserten Entnetzungseigenschaften**
Pigmented ink jet ink with improved de-wetting properties
Encre à base de pigment pour l'impression par jet d'encre ayant des propriétés de dé-mouillabilité améliorées

(30) Priorität: 23.12.1997 DE 19757690; 05.08.1998 DE 19835397
(43) Veröffentlichungstag der Anmeldung: 30.06.1999
(73) Patentinhaber: PELIKAN PRODUKTIONS AG, 8132 Egg (CH)
(72) Erfinder: Schultz, Matthias Dr., 8132 Hinteregg (CH); Howald, Nicole, 8645 Jona (CH); Griebel, Thomas Dr., 6331 Hünenberg (CH)
(74) Vertreter: Hagemann, Heinrich, Dr.rer.nat., Dipl.-Chem.

(56) Entgegenhaltungen:
- WO-A-95/01404
- GB-A- 1 209 791
- DATABASE WPI Section Ch, Week 8948 Derwent Publications Ltd., London, GB; Class A84, AN 89-352265 XP002098672 & JP 01 263173 A (MITSUBISHI PENCIL CO) , 19. Oktober 1989

## Beschreibung

Die vorliegende Erfindung betrifft eine pigmentierte Inkjet-Tinte mit verbesserten Entnetzungseigenschaften.

Man unterscheidet zwei Arten von Tinte, die für sog. Tintenstrahldrucker (Ink-Jet-Druck) Verwendung finden: Zum einen handelt es sich um Tinten, bei denen das Farbmittel als Farbstoff in einem Lösemittel gelöst ist, zum anderen um dispergierte Tinten, bei denen das Farbmittel in Form eines Pigments in einem Verdünnungsmittel dispergiert ist.

Die Eigenschaften von Tinten müssen abhängig vom zu bedruckenden Material oder anzuwendenden Druckverfahren (kontinuierliches oder drop-on-demand (DOD) Verfahren) bestimmten Kriterien genügen, wie eine erforderliche Unveränderlichkeit der Farbe, eine hohe Haltbarkeit sowie optische Dichte und dergleichen. Um diese Anforderungen zu erfüllen, finden zur Verbesserung der Druckqualität zunehmend pigmentierte Tinten Verwendung.

Pigmentierte Tinten auf der Basis hochsiedender aliphatischer Kohlenwasserstoffe neigen weniger zum Verstopfen der Tintenstrahldüsen, da sie bei Druckpausen im Bereich der Düse nicht eintrocknen. Sie sind auf porösen Substraten aufgrund rascher Migration und ihres wasserfesten Verhaltens zuverlässig einsetzbar. Derartige Tinten sind nicht elektrisch leitfähig und wirken nicht korrodierend auf die Metallteile des Druckkopfes.

Zur Erhöhung der Stabilität dieser Dispersionen werden ionische Dispergatoren, wie makromolekulare, polyionische Verbindungen aus poly- oder oligomeren Systemen mit sauren oder basischen Gruppen als sich wiederholende strukturelle Einheiten bevorzugt eingesetzt. Derartige Dispergatoren sind insbesondere auch bei nicht-wäßrigen oder im wesentlichen nicht-wäßrigen Tinten verwendbar. Als Dispergator mit sauren oder basischen Gruppen sind zum Beispiel Polyesteramine bekannt, wie SOLSPERSE (Handelsname der Zeneca Colours) und EFKA (Polyamin-Dispergator, Marke der Efka Chemicals).

Bei den vorstehend genannten Dispergatoren, insbesondere bei den Polyaminfettsäurekondensaten, hat es sich gezeigt, daß sie bei Einsatz als Dispergator in den bezeichneten Tinten haut- und augenreizend sind. Darüber hinaus setzen Rohstoff und Tinte - während der Lagerung Ammoniak frei. In der Regel ist auch der Zusatz eines weiteren Additivs notwendig, das die Benetzung der Druckkopfdüsenplatten im Tintenstrahldruckkern verhindert, sich aber ungünstig auf die Dispersionsstabilität auswirkt.

In nicht-wäßrigen pigmentierten Tinten verwendete Lösemittel umfassen neben polaren auch unpolare Lösemittel, wie aliphatische Kohlenwasserstoffe, beispielsweise EXXSOL (Handelsname der Exxon Chemical GmbH, Köln, für eine Fraktion aus der Destillierung natürlicher oder synthetischer Kohlenwasserstoffgemische). oder aromatische Kohlenwasserstoffe, beispielsweise SOLVESSO (Handelsname der Exxon Chemical GmbH für Aromatengemische) sowie deren Mischungen mit langkettigen Alkoholen, Estern und Ethern; gebräuchlich sind unpolare Lösemittel mit zumindest sechs Kohlenstoffatomen.

Aus der DE 197 26 043 ist eine pigmentierte Tinte aus mindestens 80% unpolarem Lösemittel, darin dispergiertem Pigment sowie einem Copolymer von Vinylpyrrolidon mit einem oder mehreren langkettigen alpha-Olefinen mit mindestens 6 Kohlenstoffatomen bekannt. Diese Tinte besitzt aber nicht stets uneingeschränkt zufriedenstellende Entnetzungseigenschaften.

Beim Einsatz derartiger Tinten in Tintenstrahldruckern treten Probleme dergestalt auf, daß sich ein Teil des herausgeschleuderten Tropfens abspaltet und in dem die Düse umgebenden Bereich der Düsenplatte ansammelt. Zwar kann die Tinte wieder in die Düse zurücklaufen und Teil des nächsten herausgeschleuderten Tintentropfens werden. Jedoch bildet sich bei Verkürzung der Druckpausen und Erhöhung der Ausstoßfrequenz der Tinte mehr Tintenrückstand als zurückfließen kann, der sich dann auf der Düsenplatte sammelt. Schlimmer noch ist die Ausbildung eines geschlossenen Tintenfilms auf der Düsenplatte, der die Düsen verschließt. Die Tropfen können nicht durch diesen Film gejettet werden. Der Druckvorgang kommt zum Erliegen.

Um eine Verbesserung der Entnetzung der Tinte auf der Düsenplatte zu erreichen, kann eine sog. NWC-Schicht (non-wetting coating) oder nicht benetzende Beschichtung auf der Oberfläche der Düsenplatte aufgebracht werden, die beispielsweise aus Fluorkohlenstoff oder Fluorsilan aufgebaut ist. Die oben erwähnten Probleme können durch diese Beschichtung verringert werden. Das Abperlen der Tinte wird verbessert, aber eine wesentliche Verbesserung des Entnetzungsverhaltens der Tinte wird noch nicht in ausreichendem Maße erzielt.

Ein weiteres Problem tritt beim Herstellen mehrfarbiger Bilder durch den Tintenstrahldruck hinzu, weil eine Ansammlung von Tinte auf der Oberfläche der Düsenplatte beim weiteren Herausschleudern von Tinte zum Vermischen oder Ineinanderlaufen verschiedenfarbiger Tinten führen kann.

Eine Möglichkeit, die Benetzung der Oberfläche der Düsenplatte durch die Tinte zurückzudrängen, ist die Zugabe einer Verbindung, welche die sauren oder basischen Gruppen des Dispergators in der Tinte neutralisiert, in einer die Dispersion nicht destabilisierenden Menge. Durch diese Neutralisation wird verhindert, daß sich die Tinte auf der Düsenplatte ansammelt, wobei gleichzeitig die Ablaufgeschwindigkeit der Tropfen auf der Düsenplattenoberfläche erhöht wird. Das neutralisierende Mittel kann ein kleines Molekül oder ein Polymer sein. Wenn der Dispergator ein Polyamin ist, wird als neutralisierendes Mittel eine Säure eingesetzt. Beispiele hierfür sind organische Carbonsäuren, wie Essig- oder Citronensäure, organische Sulfonsäuren, Phenole oder Novolacke, wie Uravar FN5. Enthält der Dispergator saure Gruppen, ist das neutralisierende Mittel geeigneterweise ein Amin. Als Lösemittel werden unpolare organische Lösemittel und Mischungen mit geringen Mengen polarer Lösemittel bevorzugt. Derartige Tinten sind in der WO 97/15633 beschrieben.

Diese bekannten Tinten weisen allerdings eine Reihe von Nachteilen auf. So reizen die eingesetzten Dispergatoren und Additive, die Augen, Haut und Schleimhäute.

Ferner ist die Dispersionsstabilität der bekannten Tinten auf der Basis von unpolaren Kohlenwasserstoffen nicht ausreichend, da durch Zugabe weiterer Additive zwar andere Eigenschaften, wie die Entnetzung der Tinte, verbessert werden können, aber gleichzeitig die Stabilität der Dispersionsphase der Tinte abnimmt. Dies kann bei längerer Lagerung zu Inhomogenitäten und Sedimentbildung führen.

Der Erfindung liegt daher die Aufgabe zugrunde, eine Tinte zur Verwendung in Tintenstrahldruckern bereitzustellen, die die aufgezeigten Nachteile des Standes der Technik nicht oder nur vermindert aufweist die insbesondere eine verbesserte Dispersionsstabilität auch bei längerer Lagerung zeigt und gleichzeitig eine verbesserte Entnetzung der unpolaren pigmentierten Tinte auf der Düsenplatte eines Tintenstrahldruckkopfes besitzt. Ferner sollte das Entnetzungsadditiv keine toxischen Eigenschaften aufweisen, insbesondere nicht haut- und augenreizend sein. Darüber hinaus soll eine derartige Tinte das vorteilhafte Bedrucken saugender Materialien, wie Papier und Karton, mit guter Funktionsfähigkeit ermöglichen.

Erfindungsgemäß wird diese Aufgabe durch eine Inkjet-Tinte gelöst, enthaltend
**(a)** ein Lösemittel, das zumindest 80% eines unpolaren, nicht-wäßrigen Lösemittels aufweist,
**(b)** ein im Lösemittel dispergiertes Pigment und
**(c)** ein oder mehrere Phospholipide in Form einer phospholipid-angereicherten Lecithin-Fraktion.

Notwendige Bestandteile der erfindungsgemäßen Inkjet-Tinte sind demzufolge Lösemittel. Pigment und ein oder mehrere Phospholipide.

Es hat sich nun überraschenderweise gezeigt, daß der Zusatz zumindest eines Phospholipids zu pigmentierter Inkjet-Tinte die Entnetztungseigenschaften der Tinte deutlich verbessert. Dieses Verhalten könnte auf die amphiphilen Eigenschaften der Phospholipide zurückgehen. Phospholipide besitzen aufgrund ihrer hydrophilen Kopfgruppe und hydrophoben Fettsäurekette besondere Eigenschaften.

Die Phospholipide können sogenannte Liposome bilden - zumeist kugelförmige Gebilde mit einer Doppelmembran aus den Lipidmolekülen, wobei die lyophilen Teile der Moleküle ins Innere des Liposoms zeigen sowie seine Oberfläche bilden, während die lyophoben Teile der Moleküle in der Membran aufeinander zeigen. Derartige Vesikel sind zur Einkapselung von Pigmentteilchen im Rahmen der Erfindung sehr gut geeignet und wirken daher nicht nur als Entnetzungsadditiv, sondern auch als Stabilisator.

Phospholipide kommen in sämtlichen tierischen und pflanzlichen Lebensmitteln vor und gehören zu den komplexen Lipiden, die in die Sphingophospholipide und die Glycerophospholipide eingeteilt werden. Die meisten Phospholipide sind Derivate des Glycerins als hydrophiler Komponente und werden auch als Phosphoglyceride oder Phosphatide bezeichnet (letztere Bezeichnung wurde früher für Phospholipide insgesamt verwendet). Die Glycerophospholipide gliedern sich in Lecithine, Kephaline. Cardiolipine, Phosphatidylinosite und -inositphosphate.

Die vier wichtigsten Phospholipide sind: (1) Phosphatidylcholin (PC), (2) Phosphatidylethanolamin (PE), (3) Phosphatidylinosit (PI) und (4) Phosphatidsäure (PA). Sie sind wie folgt aufgebaut:
(1) Phosphatidylcholin (PC) ist das am häufigsten vorkommende Phospholipid. Es ist ein bekannter O/W-Emulgator und Liposomenbildner und besitzt eine zwitterionische Struktur mit einer positiven und einer negativen Ladung, die sich gegenseitig nach außen aufheben. Phosphatidylcholin besitzt die allgemeine chemische Formel (I): 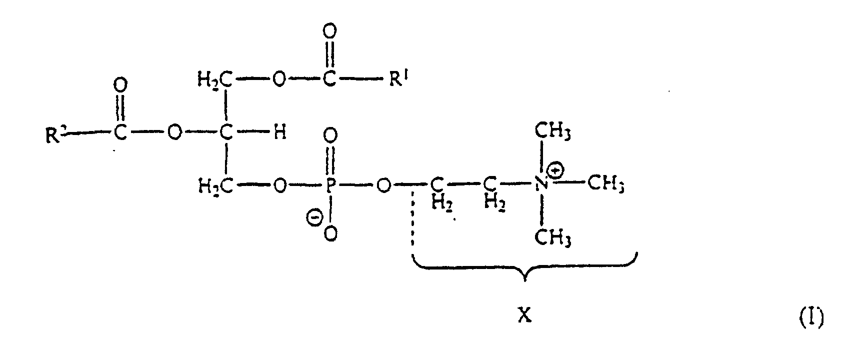 in der R₁ und R₂ typischerweise unverzweigte aliphatische Reste mit 15 oder 17 Kohlenstoffatomen mit bis zu 4 cis-Doppelbindungen sind und X den Cholinrest darstellt.
(2) Phosphatidylethanolamin (PE) verfügt im Vergleich zu Phosphatidylcholin über eine kleine Kopfgruppe und besitzt die in Formel (I) dargestellte Struktur mit X = 2-Aminoethanol. Phosphatidylethanolamin ist ein guter Co-Emulgator mit dem oben beschriebenen zwitterionischen Aufbau. (3) Das einfach negativ geladene Phosphatidylinosit (PI) besitzt eine große hydrophile Kopfgruppe und bildet mit zweiwertigen Ionen Salze. Die Struktur von Phosphatidylinosit entspricht Formel (I), wobei X = Inosit ist. (4) Phosphatidsäuren (PA) sind zweifach negativ geladene Phospholipide, die in Wasser mit zweiwertigen Ionen Salze bilden und eine Struktur der Formel (I) mit X = H besitzen.

Die einzelnen Phosphatidyl-Derivate unterscheiden sich demnach in chemischer Hinsicht durch die funktionellen Gruppen an der Phosphorsäure und damit durch Ladung und Polarität. Sie bewirken trotz verschiedener Strukturen und Eigenschaften als Additiv in der erfindungsgemäßen Tinte ein wesentlich verbessertes Entnetzungsvermögen.

Die erfindungsgemäße Tinte kann als Entnetzungsadditiv auch mehrere Phospholipide gemischt bspw. in Form eines Lecithins enthalten. Lecithin, das den Glycerophospholipiden zugeordnet wird, ist nicht nur ein Stoff, sondern setzt sich aus Mischungen mehrerer Phospholipide zusammen, die bei Extraktion abhängig vom gewählten biologischen Ausgangsmaterial (z.B. pflanzlichen Samenzellen, Pflanzenfetten oder Sojabohnen) in verschiedenen Mengenverhältnissen vorliegen. Die früher gebräuchliche Verwendung des Ausdrucks "Lecithin" allein für Phosphatidylcholin (PC) ist unzutreffend. In der Industrie wird üblicherweise ein Gemisch aus Lecithinen und Kephalinen als "Lecithin" bezeichnet, wobei der Begriff "Lecithin" auch die Summe aller in einem Lebensmittel vorhandenen Phospholipide bezeichnen kann. In der vorliegenden Erfindung soll "Lecithin" als eine Mischung mehrerer Phospholipide verschiedener chemischer Strukturen und damit unterschiedlicher Funktionalitäten verstanden werden.

Ein Soja-Lecithin kann zum Beispiel aufgebaut sein aus 71% Phospholipiden und anderen Bestandteilen: 24% Phosphatidylcholin/Lysophosphatidylcholin; 21% Phosphatidylethanolamin/Acylphosphatidylethanolamin/Lysophosphatidylethanolamin; 15% Phosphatidylinosit; 7% Phosphatidsäure und 4% andere Phospholipide sowie 16% Glykolipiden, 8% Kohlehydraten, 3% Neutrallipiden, 1% Mineralstoffe und 1% Wasser.

Im Rahmen der Erfindung schließt eine Mischung aus Phospholipiden auch Phospholipid-Fraktionen mit unterschiedlich angereicherten Phospholipiden, gewonnen aus verschiedenen Aufbereitungsverfahren, ein. Die Aufbereitung einer komplexen Lecithin-Mischung, wie sie z.B. oben angegeben ist, erfolgt weltweit nach dem für NATTERMANN patentierten Verfahren aus standardisiertem nativen Soja-Lecithin mittels Ethanol als einzigem Extraktionsmittel und Chromatographie an Kieselgel. Diese Phospholipid-angereicherten Lecithinfraktionen mit unterschiedlichen Funktionalitäten bezeichnet man auch als Nathine. Sie sind Liposomenbildner, Emulgatoren und Synergisten verschiedener Zusammensetzungen und unterscheiden sich im Phospholipid-Verhältnis (PL-ratio) voneinander.

Die Zusammensetzungen einiger Nathin-Phospholipide sind in der folgenden Tabelle zusammengestellt:

**Tabelle I:**

| | Fraktionierte Lecithine | | | | | | Native Lecithine (zum Vergleich) |
|---|---|---|---|---|---|---|---|
| Lecithin-Qualität | PC-angereicherte alkohollösliche Fraktion | | PI/PA-angereicherte alkoholunlösliche Fraktion | | PE-angereicherte alkohollösliche Fraktion | | standardisierte Soja-Lecithine |
| Marke | NATHIN 130 | NATHIN 140 | NATHIN 3-F | NATHIN 3-KE | NATHIN 5-F | NATHIN 5-KE | Sternprime N-10 |
| physik. Beschaffenheit | dickflüssig | pastös | flüssig | entölt, Pulver | flüssig | entölt, Pulver | flüssig |
| Acetonunlöslichkeit (AU) | 65 | 70 | 62 | 97 | 40 | 97 | 62 |
| Phospholipide *) | 45 | 63 | 42 | 64 | 30 | 65 | 45 |
| PC/LPC | 32 | 47 | 5 | 8 | 5 | 11 | 16 |
| PE/APE/LPE | 10 | 11 | 14 | 21 | 14 | 29 | 13 |
| PI | 1 | 2 | 12 | 18 | 5 | 11 | 10 |
| PA | 1 | 2 | 9 | 14 | 4 | 9 | 4 |
| andere PL | 1 | 1 | 2 | 3 | 2 | 5 | 2 |
| Glykolipide | 10 | 6 | 12 | 20 | 10 | 20 | 11 |
| Kohlenhydrate | 5 | 3 | 5 | 9 | 5 | 9 | 5 |
| Neutrallipide | 38 | 27 | 39 | 4 | 53 | 3 | 37 |
| Mineralstoffe | 1 | - | 1 | 2 | 1 | 2 | 1 |
| Wasser | 1 | 1 | 1 | 1 | 1 | 1 | 1 |

| | | | | | | | |
|---|---|---|---|---|---|---|---|
| *) Durchschnittswerte ermittelt nach der 31-P-NMR-Spektroskopie PC: Phosphatidylcholin APE: Acylphosphatidylethanolamin PA: Phosphatidsäure LPC: Lysophosphatidylcholin LPE: Lysophosphatidylethanolamin PL: Phospholipide PE: Phosphatidylethanolamin PI: Phosphatidylinosit | | | | | | | |

Die üblicherwiese bekannten Grundbestandteile der Phospholipide, wie PC, PE, PI und PA, finden sich mit unterschiedlichem Gehalt in den verschiedenen Nathin-Typen wieder, d.h., es wird (werden) ein (oder mehrere) Phospholipid(e) angereichert.

Überraschenderweise besitzen die Nathin-Phospholipide, die als grenzflächenaktive Substanzen die Grenzflächenspannung zwischen zwei miteinander nicht mischbaren Flüssigkeiten herabsetzen und somit eine Emulsion stabilisieren, auch in kolloiddispersen Systemen stabilisierende Wirkung. Darüber hinaus verleihen sie einer pigmentierten Tinte unerwartet gute Entnetzungseigenschaften, was ein besseres Abperlen der Tinte von der Düsenplatte bewirkt.

Ölhaltige und ölfreie Phospholipide können gleichermaßen verwendet werden und zeigen unabhängig vom Ölanteil die gleichen hervorragenden Eigenschaften als Entnetzungsadditive. Bevorzugt eingesetzte Phospholipide sind Nathin 5-KE®, Nathin 3-KE® (PE/PA-angereicherte entölte Fraktionen), und Nathin 140® (PC-angereicherte ölhaltige Fraktion).

Von besonderer Bedeutung ist, daß die Phospholipide und ihre Mischungen, deren bekannter Anwendungsbereich an sich im Nahrungsmittelbereich liegt, keinerlei Toxizität gegenüber Mensch oder Tier besitzen und daher in der erfindungsgemäßen Tinte ohne Bedenken eingesetzt werden können.

Es ist somit offensichtlich, daß viele verschiedene Typen von Verbindungen von dem Begriff "Phospholipide" umfaßt werden, wobei es für den Fachmann im Stand der Technik selbstverständlich ist, daß der Ausdruck "Phospholipid" jedes bekannte Phospholipid umfaßt und keine Beschränkung auf die in der vorliegenden Erfindung genannten Beispiele beabsichtigt ist.

In der erfindungsgemäßen Tinte werden neben dem beschriebenen Phospholipid üblicherweise ein oder mehrere in der Tintenstrahldrucktechnik verwendete Pigmente eingesetzt, d.h. es handelt sich um alle Farbmittel, die in dem hier zugrunde gelegten Lösemittel unlöslich sind. Bevorzugt sind die im "The Colour Index" aufgeführten "Pigmentfarbstoffe". Ein besonders bevorzugtes schwarzes Pigment ist Ruß. Für die erfindungsgemäße Tinte ist die Wahl des Pigments im Hinblick auf die erwünschten Farbeffekte von Bedeutung. Es spielen sowohl die Farbe mit dem jeweiligen Farbton und dessen Intensität eine Rolle als auch die benötigten Verarbeitungseigenschaften. Normalerweise werden Pigmentagglomerate eingesetzt. Diese wären als solche im allgemeinen für den vorliegenden Zweck nicht tauglich. Diese Pigmentagglomerate werden daher zunächst in das Lösemittel überführt.

Die vorliegende Erfindung kann in einer Anzahl von Einzelfällen auf den Einsatz üblicher Dispergatoren verzichten, da die Phospholipide regelmäßig eigenständig eine hinlängliche Dispersionsstabilität der Inkjet-Tinte herbeiführen. Dies gilt insbesondere dann, wenn das Phospholipid vor der Naßdispergierung (Mahlung) des Pigmentpulvers zugesetzt wird. Dies führt vorteilhafterweise dazu, daß das Phospholipid im Dispergierprozeß an der Pigmentoberflächer angelagert wird und somit das Reaggregieren des Pigments verhindert, was zu einer Stabilisierung der Dispersion führt. Der Ausschluß von Dispergatoren mit unerwünschten Nebeneffekten unter erfindungsgemäßem Einsatz von Phospholipiden führt auch zu dem Vorteil, daß die erfindungsgemäßen Inkjet-Tinten keine gesundheitsschädigende Wirkung zeigen, keinen Ammoniak freisetzen, jedoch eine gute Entnetzung von Düsenplattenbeschichtungen auf der Grundlage fluorierter Kohlenwasserstoffe ohne zusätzliches Additiv ermöglichen. Unter den Bedingungen des Ausschlusses eines zusätzlichen Dispergators enthält die erfindungsgemäße Inkjet-Tinte vorzugsweise etwa 1 bis 35 Gew.-%, insbesondere etwa 5 bis 30 Gew.-% eines oder mehrerer Phospholipide. Eine besonders bevorzugte Inkjet-Tinte gemäß der Erfindung hat, bezogen auf die Gesamtmenge Lösemittel, dispergiertes Pigment und Phospholipid in der Tinte, folgende Zusammensetzung: Etwa 50 bis 97 Gew.-%, insbesondere etwa 60 bis 85 Gew.-% Lösemittel, etwa 1 bis 35 Gew.-%, insbesondere etwa 5 bis 30 Gew.-% eines oder mehrerer Phospholipide und etwa 2 bis 20 Gew.-%, insbesondere etwa 4 bis 15 Gew.-% Pigment.

In Einzelfällen kann es von Vorteil sein, was von den jeweils gewählten Pigmenten bzw. unlöslichen Farbstoffen abhängt, einen zusätzlichen Dispergator, der sich demzufolge chemisch von dem ebenfalls dispergierenden und erfindungsgemäß eingesetzten Phospholipid unterscheidet, heranzuziehen. Durch Zugabe dieses zusätzlichen Dispergators werden dann in einem Mahlprozeß gewonnene Pigmentagglomerate (aufgebaut aus einer Vielzahl von Primärteilchen) in kleinere Agglomerate und zweckmäßiger- und vorteilhafterweise bis zu den einzelnen Primärteilchen "vermahlen". Bei diesem Mahlprozeß lagert sich der Dispergator auf der Oberfläche der Primärteilchen mit der Folge ab, daß letztlich eine stabile Dispersion entsteht.

Der einzusetzende Dispergator richtet sich nach dem Einzelfall. So ist hier eine Abstimmung zwischen dem gewählten Pigment einerseits und dem jeweils herangezogenen Lösemittel andererseits vorzunehmen. Mit anderen Worten ist der Dispergator ein "Adaptor" zwischen Pigment und Lösemittel, damit das Pigment in einer stabilen Dispersion vorliegt. Diese Abstimmung wirft für den Fachmann keinerlei Probleme auf, wobei insbesondere die Wahl des Pigmenttyps relativ unproblematisch ist. Es gehört zum fachmännischen Wissen, hier geeignete Abstimmungen vorzunehmen, was auch durch einfache handwerkliche Erprobungen möglich ist.

Bei der Auswahl des Dispergators ist somit in der Regel zu berücksichtigen, daß der Dispergator und das eingesetzte Pigment in der oben erläuterten Art und Weise miteinander wechselwirken. Vorteilhafterweise sollte deshalb der Dispergator mit basischen Gruppen zusammen mit einem die entsprechenden Säuregruppen enthaltenden Pigment eingesetzt werden.

In einer bevorzugten Ausführungsform enthält die erfindungsgemäße Tinte einen Dispergator in Form eines Copolymers von Vinylpyrrolidon mit einem oder mehreren langkettigen α-Olefinen mit mindestens 6 Kohlenstoffatomen, insbesondere mit 6 bis 24 Kohlenstoffatomen. Dieses amphiphile Polymer lagert sich aufgrund physikalisch/chemischer Wechselwirkung an der Oberfläche der Pigmentteilchen an, wodurch diese an der Oberfläche des Substrats festgehalten werden und eine höhere optische Dichte bei gleicher Pigmentkonzentration resultiert.

Das Lösemittel der erfindungsgemäßen Tinte besteht zu mindestens 80%, insbesondere zu mindestens etwa 95% und besonders bevorzugt im wesentlichen vollständig aus unpolaren, nicht-wäßrigen Lösemitteln. Die Auswahl des Lösemittels hängt in erster Linie von den erwünschten Eigenschaften ab. Das Lösemittel muß schnell verdunsten, damit die Tinte trocknet, oder genügend schnell in das Substrat migrieren, damit ein Vermischen der Tinte vermieden wird, und darf gleichzeitig keine relevante Toxizität besitzen.

Hinsichtlich der Abstimmung des Gesamtsystems von Pigment-Dispergator-Lösemittel sind die einem jeden Fachmann im Stand der Technik bekannten allgemeinen Regeln anzuwenden. Das im Rahmen der Erfindung eingesetzte Phopholipid funktioniert möglicherweise nicht mit jedem Dispergator. Die Funktionsfähigkeit ist nur dann gegeben, wenn zwischen allen Beteiligten des Systems die erforderliche Affinität gegeben ist. Mit anderen Worten bedeutet das, daß das Phospholipid mit einem Ende mit dem Dispergator derartig in Wechselwirkung treten muß, daß der überschüssige Dispergator auf der Düsenplatte nicht benetzend wirkt. Das vorstehend definierte Lösemittel ist weitestgehend unpolar. Es stehen im Lösemittel keine freien Ladungen zur Verfügung. Damit ist es im wesentlichen an dem Gesamtsystem nicht wechselwirkend beteiligt.

Selbstverständlich können neben den Bestandteilen (a) bis (d) weitere übliche Tintenadditive zugesetzt werden, wie Dispergierhilfsmittel, oberflächenaktive Substanzen (Netzmittel), Harze und Wachse. Weitere Additive können auch zur Regulierung der Viskosität verwendet werden; die bevorzugte Viskosität der erfindungsgemäßen Tinte liegt im Bereich von etwa 1 bis 50 cSt.

Die einzusetzende Menge an Pigment hängt weitgehend von dessen Zusammensetzung ab und liegt vorzugsweise im Bereich von etwa 2 bis 15 Gew.-%, bezogen auf die Gesamtmenge der Tinte. Die gewählte Menge an Dispergator richtet sich in erster Linie nach der Art und Menge des verwendeten Pigments, Lösemittels und Phospholipids und liegt vorzugsweise etwa im Bereich von 5 bis 25 Gew.-%, bezogen auf die Gesamtmenge der Tinte. Die erfindungsgemäße Tinte enthält das oder die Phopholipide in einer in Abhängigkeit von den anderen Bestandteilen wirksamen Menge, die in der Regel im Bereich von etwa 0,05 bis 2 Gew.-%, bezogen auf die Gesamtmenge der Tinte, insbesondere in einem Bereich von etwa 0,1 bis 20 Gew.-%, liegt. Besonders bevorzugt ist das oder sind die Phospholipide in der Tinte in einer Menge von etwa 0,5 bis 15 Gew.-%, bezogen auf die Gesamtmenge der Tinte, vorhanden.

Vorteilhafterweise wird der zusätzlich eingesetzte Dispergator bezüglich seiner chemischen Eigenart so ausgewählt, daß die wesentlichen Vorteile, die mit dem Einsatz von Phospholipiden als Entnetzungs- und Dispergiermittel verbunden sind, beibehalten werden, insbesondere durch den Einsatz der erfindungsgemäßen Inkjet-Tinte keine gesundheitsschädigende Wirkung auftritt, kein Ammoniak freigesetzt wird, eine gute Entnetzung von Düsenplattenbeschichtungen, insbesondere auf der Grundlage fluorierter Kohlenwasserstoffe, ohne weiteres zusätzliches Additiv erreicht werden. Darüber hinaus hat es sich gezeigt, daß diese erfindungsgemäßen Inkjet-Tinten verdruckbar sind, so auch auf saugenden Materialien, wie Papier und Karton. Dabei besteht keine wesentliche Einschränkung bei der Wahl des Druckers. So zeigen Drucktests mit MIT-Uniprint-Druckern gute Verdruckbarkeit. Demzufolge sind alle Drucker mit MIT-Druckkopf zum Drucken mit der erfindungsgemäßen Inkjet-Tinte geeignet. Gleichermaßen geeignet sind auch Drucker, die zum Verdrucken ölbasierender Tinten in der Lage sind.

Die Erfindung soll anhand der folgenden Beispiele veranschaulicht werden.

### Beispiel 1 bis 8

Nach folgender Rezeptur wird eine Tinte hergestellt. Darin ist EXXSOL D-140 ein Gemisch aliphatischer Kohlenwasserstoffe von Exxon mit einem Siedepunkt von 287°C; Antaron V-216 ist ein PVP/Hexadecen-Copolymer von GAF, Chemicals, Schweiz; Elftex 495 ist ein Rußpigment der Cabot Corporation (hier wurden zunächst konzentriertere Ansätze auf einer Rührwerkskugelmühle gemahlen und anschließend auf obige Zusammensetzung verdünnt):

| | |
|---|---|
| EXXSOL D-140 | 82,2 Gew.-% |
| Antaron V-216 | 10,2 Gew.-% |
| Elftex 495 | 7,6 Gew.-% |

Aus dieser Tinte füllt man 8 Tintenproben ab (Tinten Nr. 1 bis 8), die jweils mit 0,05, 0,25, 0,5, 1,0, 1,5, 2,0, 5,0 und 10,0 Gew.-% Nathin 5-KE® versetzt werden. Dann wird ein Streifen aus Polyimid, der mit einem Fluorsilan beschichtet ist, mit 5 cm Länge x 1 cm Breite in die entsprechende Tinte eingetaucht, und die für die Entnetzung (das Abperlen) bei hoher optischer Dichte der Tinte benötigte Zeit (in Sekunden) wird nach 3 Stunden, 1 Tag, 4 Tagen und 7 Tagen gemessen. Wenn die Ablaufzeit 60 sec überschreitet, wird zusätzlich die prozentual entnetzte Fläche in Klammern angegeben. Die Ergebnisse sind in der nachfolgenden Tabelle II aufgelistet:

**Tabelle II**

| **Tinte Nr.** | **0** | **1** | **2** | **3** | **4** | **5** | **6** | **7** | **8** |
|---|---|---|---|---|---|---|---|---|---|
| Anteil Nathin 5-KE® in Gew.-% | 0 | 0,05 | 0,25 | 0,5 | 1 | 1,5 | 2 | 5 | 10 |
| Entnetzung in sec nach | | | | | | | | | |
| 3h | 30 | 8 | 4 | 4 | 5 | 6 | 7 | 8 | 8 |
| 1d | >60 | 25 | 11 | 11 | 10 | 10 | 12 | 17 | 17 |
| | (10%) | | | | | | | | |
| 4d | >60 | >60 | 25 | 25 | 30 | 30 | 30 | 40 | 60 |
| | (0%) | (15%) | | | | | | | |
| 7d | >60 | >60 | 25 | 25 | 30 | 30 | 35 | 40 | >60 |
| | (0%) | (5%) | | | | | | | (80%) |

### Beispiele 9 bis 15

Aus der Tinte gleicher Zusammensetzung wie in Beispiel 1 bis 8 füllt man 7 Tintenproben ab (Tinten Nr. 9 bis 15), die jeweils mit 0,05, 0,5, 1,0, 2,0, 4,0, 8,0 und 16,0 Gew.-% Nathin 3-KE® versetzt werden. Dann wird ein Streifen aus Polyimid, der mit einem Fluorsilan beschichtet ist, mit 5 cm Länge x 1 cm Breite in die entsprechende Tinte eingetaucht und die für das Entnetzen der Tinte benötigte Zeit (in Sekunden) nach 3 Stunden, 1 Tag, 4 Tagen und 7 Tagen gemessen. Zum Vergleich wird die Tintenprobe Nr.0 gleicher Zusammensetzung ohne Zusatz von Entnetzungsadditiv, wie oben erläutert, angegeben. Die Ergebnisse sind in der nachfolgenden Tabelle III aufgelistet:

**Tabelle III**

| **Tinte Nr.** | **0** | **9** | **10** | **11** | **12** | **13** | **14** | **15** |
|---|---|---|---|---|---|---|---|---|
| Anteil Nathin 3-KE® in Gew.-% | 0 | 0,05 | 0,5 | 1 | 2 | 4 | 8 | 16 |
| Entnetzung in sec nach | | | | | | | | |
| 3h | 30 | 5 | 4 | 4 | 4 | 5 | 6 | 7 |
| 1d | >60 | 10 | 7 | 10 | 10 | 12 | 15 | 15 |
| | (10%) | | | | | | | |
| 4d | >60 | 30 | 17 | 20 | 18 | 19 | 20 | 17 |
| | (0%) | | | | | | | |
| 7d | >60 | 40 | 20 | 30 | 28 | 30 | 35 | 30 |
| | (0%) | | | | | | | |

### Beispiele 16 bis 22

Aus der Tinte gleicher Zusammensetzung wie in Beispiel 1 bis 8 füllt man 7 Tintenproben ab (Tinten Nr. 16 bis 22), die jeweils mit 0,05, 0,5 1,0, 2,0, 4,0, 8.0 und 16,0 Gew.-% Nathin 140® versetzt werden. Dann wird ein Streifen aus Polyimid, der mit einem Fluorsilan beschichtet ist, mit 5 cm Länge x 1 cm Breite in die entsprechende Tinte eingetaucht und die für das Entnetzen der Tinte benötigte Zeit (in Sekunden) nach 3 Stunden, 1 Tag, 4 Tagen und 7 Tagen gemessen. Wenn die Ablaufzeit 60 sec überschreitet, wird als Ergebnis die entnetzte Fläche als Prozentwert in Klammern angegeben. Zum Vergleich wird die Tintenprobe Nr.0 gleicher Zusammensetzung ohne Zusatz von Entnetzungsadditiv, wie oben erläutert, angegeben. Die Ergebnisse sind in der nachfolgenden Tabelle IV aufgelistet:

**Tabelle IV**

| **Tinte Nr.** | **0** | **16** | **17** | **18** | **19** | **20** | **21** | **22** |
|---|---|---|---|---|---|---|---|---|
| Anteil Nathin 140® in Gew.-% | 0 | 0,05 | 0,5 | 1 | 2 | 4 | 8 | 16 |
| Entnetzung in sec nach | | | | | | | | |
| 3h | 30 | 7 | 4 | 4 | 4 | 6 | 6 | 9 |
| 1d | >60 | 50 | 25 | 20 | 20 | 20 | 16 | 13 |
| | (10%) | | | | | | | |
| 4d | >60 | >60 | >60 | >60 | >60 | >60 | >60 | 45 |
| | (0%) | (5%) | (20%) | (30%) | (25%) | (60%) | (90%) | |
| 7d | >60 | >60 | >60 | >60 | >60 | >60 | >60 | 50 |
| | (0%) | (2%) | (10%) | (20%) | (20%) | (30%) | (60%) | |

### Vergleichsbeispiele V1 bis V3

Die Tinte gleicher Zusammensetzung wie in Beispiel 1 bis 8 wird mit dem in der WO 97/15633 beschriebenen neutralisierenden Mittel Uravar FN5 in einer Menge von 1,0, 1,5 und 5,0 Gew.-% versetzt und es werden unter denselben in den Beispielen 1 bis 22 erläuterten Bedingungen Messungen durchgeführt. Die Ergebnisse sind in Tabelle VI zusammengestellt:

**Tabelle VI**

| **Tinte Nr.** | **V1** | **V2** | **V3** |
|---|---|---|---|
| Anteil Uravar FN5 in Gew.-% | 1 | 1,5 | 5 |
| Entnetzung in sec nach | | | |
| 3h | 8 | 8 | >60 |
| | | | (0%) |
| 1d | 7 | 3 | >60 |
| | | | (0%) |
| 4d | 11 | 12 | >60 |
| | | | (0%) |
| 7d | 12 | 14 | >60 |
| | | | (0%) |

Zusammenfassend ist aus den obigen Tabellen II bis V unmittelbar ersichtlich, daß die erfindungsgemäßen Tinten mit Phospholipidzusatz ausgezeichnete Entnetzungseigenschaften besitzen. Insbesondere bei sehr geringen Mengen zeigen sich auch nach mehreren Wochen unverändert hervorragende Eigenschaften beim Entnetzen der erfindungsgemäßen Tinte mit Zusatz des Entnetzungsadditivs.

Bei Verwendung von Uravar FN5 (Tabelle VI) werden ausschließlich in sehr engen Grenzen entnetzende Eigenschaften festgestellt, die durch umfangreiche Versuche für jede Tinte zunächst ermittelt werden müßten. Im Langzeittest zeigt sich zudem, daß Uravar FN5 nicht als Entnetzungsadditiv geeignet ist.

### Beispiel 23

Die Tinten werden mittels einem Schwamm mit leichtem Druck auf einen Streifen aus Polyimid, der mit einem Fluosilan beschichtet ist, aufgebracht. Dabei zeigt sich bei Tinte Nr. 0 ohne Zusatz, daß sich ein leichter, weißlicher, dünner Film bildet, auf dem die Tinte nicht mehr gut entnetzt. Bei den Tinten Nr. 7, 12, 13, 15 und 22 bildet sich nur in sehr geringem Umfang bzw. überhaupt kein Film, die Tinten entnetzen alle gut.

Bei Tinte V2 bildet sich dieser Film in verstärkter Form aus, die Tinte entnetzt fast gar nicht mehr.

Beispiel 23 zeigt deutlich, daß Uravar FN5 eine Verschlechterung der Entnetzung bewirkt, während die Phospholipide die Entnetzung nach wie vor verbessern. Die Tinten mit Uravar FN5 dicken darüber hinaus mit der Zeit ein. Besonders stark tritt dieser Effekt bei Tinte V3 auf. Uravar FN5 ist als Entnetzungsadditiv über längere Zeit und außerhalb der engen Mengenbereiche ungeeignet.

### Beispiel 24

Nach folgender Rezeptur wird eine Tinte hergestellt. Darin ist EXXSOL D-140 ein Gemisch aliphatischer Kohlenwasserstoffe von Exxon mit einem Siedepunkt von 287°C, Paliotol Gelb D1155 ein Gelbpigment von der Firma BASF und Nathin 3KE eine PE/PA-angereicherte entölte Fraktion von Phospholipiden von der Firma Stern:

| | |
|---|---|
| EXXSOL D-140 | 87,0 Gew.-% |
| Nathin 3KE | 8,0 Gew.-% |
| Paliotol Gelb D1155 | 5,0 Gew.-% |

Auf einer Rührwerkskugelmühle wird ein Ansatz der Zusammensetzung 12,5 Gew.-% Pigment, 20 Gew.-% Nathin 3KE (dispergierender Bestandteil) und 67,5% Exxsol D140 mehrere Stunden naßdispergiert ("gemahlen"). Anschließend wird auf die oben bezeichnete Endzusammensetzung verdünnt.

Mit dieser Tinte wurden Entnetzungstests durchgeführt, wie sie beispielsweise mit denjenigen der Beispiele 1 bis 8 erfolgten. Auch hier wird demzufolge die für die Entnetzung (das Abperlen) der Tinte benötigte Zeit (in Sekunden) nach 3 Stunden, 1 Tag, 4 Tagen und 7 Tagen gemessen. Dabei ergaben sich folgende Werte: Nach 3 Stunden 10, nach 1 Tag 22, nach 4 Tagen 34 und nach 7 Tagen 40 Sekunden.

## Patentansprüche

1. Inkjet-Tinte, enthaltend
**(a)** ein Lösemittel, das zumindest 80% eines unpolaren, nicht-wässerigen Lösemittels enthält,
**(b)** ein im Lösemittel dispergiertes Pigment und
**(c)** ein oder mehrere Phospholipide in Form einer Phospholipid-angereicherten Lecithin-Fraktion.

2. Inkjet-Tinte nach Anspruch 1, **dadurch gekennzeichnet, dass** sie einen Dispergator enthält.

3. Inkjet-Tinte nach Anspruch 1 oder 2, **dadurch gekennzeichnet, dass** das Phospholipid in einer Menge von etwa 0,05 bis 25 Gew.-%, bezogen auf die Gesamtmenge der Tinte, insbesondere in einer Menge von etwa 0,1 bis 20 Gew.-%, vorliegt.

4. Inkjet-Tinte nach Anspruch 3, **dadurch gekennzeichnet, dass** das Phospholipid in einer Menge von etwa 0,5 bis 15 Gew.-% vorliegt.

5. Inkjet-Tinte nach mindestens einem der vorhergehenden Ansprüche 2 bis 4, **dadurch gekennzeichnet, dass** der Dispergator in Form eines Copolymers von Vinylpyrrolidon mit einem oder mehreren langkettigen α-Olefinen mit mindestens 6 Kohlenstoffatomen, insbesondere mit 6 bis 24 Kohlenstoffatomen, vorliegt.

6. Inkjet-Tinte nach mindestens einem der vorangehenden Ansprüche 2 bis 5, **dadurch gekennzeichnet, dass** sie, bezogen auf die Gesamtmenge Lösemittel, Dispergator, dispergiertes Pigment und ein oder mehrerer Phospholipide in der Tinte, enthält:
**a)** etwa 60 bis 90 Gew.-% Lösemittel, das zumindest 80% eines unpolaren, nicht-wässerigen Lösemittels enthält,
**b)** etwa 2 bis 15 Gew.-% dispergiertes Pigment,
**c)** etwa 0,05 bis 25 Gew.-% ein oder mehrerer Phospholipide in Form einer Lecithin-Fraktion und
**d)** etwa 5 bis 25 Gew.-% Dispergator.

7. Inkjet-Tinte nach Anspruch 1, **dadurch gekennzeichnet, dass** sie etwa 1 bis 35 Gew.-%, insbesondere etwa 5 bis 30 Gew.-%, eines oder mehrerer Phospholipide in Form einer Lecithin-Fraktion enthält.

8. Inkjet-Tinte nach Anspruch 1 oder 9, **dadurch gekennzeichnet, dass** sie, bezogen auf die Gesamtmenge Lösemittel, dispergiertes Pigment und Phospholipid in der Tinte, enthält:
**a)** etwa 50 bis 97 Gew.-% Lösemittel, das zumindest 80% eines unpolaren, nicht-wässerigen Lösemittels enthält,
**b)** etwa 2 bis 20 Gew.-% Pigment und
**c)** etwa 1 bis 35 Gew.-% ein oder mehrerer Phospholipide in Form einer Lecithin-Fraktion.

## Claims

1. Inkjet ink containing
a) a solvent containing at least 80% of a covalent non-aqueous solvent,
b) a pigment dispersed in the solvent and
c) one or more phospholipids in the form of a phospholipid-enriched lecithin fraction.

2. Inkjet ink according to claim 1, **characterised in that** it contains a dispersing agent.

3. Inkjet ink according to claim 1 or claim 2, **characterised in that** the phospholipid is present in a proportion of about 0.05 to 25 wt.%, especially in a proportion of about 0.1 to 20 wt.%, relative to the total quantity of ink.

4. Inkjet ink according to claim 3, **characterised in that** the phospholipid is present in a proportion of about 0.5 to 15 wt.%.

5. Inkjet ink according to at least one of the preceding claims 2 to 4, **characterised in that** the dispersing agent is present in the form of a copolymer of vinyl pyrrolidone with one more long-chain α-olefins containing at least 6 carbon atoms, especially 6 to 24 carbon atoms.

6. Inkjet ink according to at least one of the preceding claims 2 to 5, **characterised in that** it contains the following, relative to the total quantity of solvent, dispersing agent, dispersed pigments and one or more phospholipids in the ink:
a) about 60 to 90 wt.% solvent containing at least 80% of a covalent non-aqueous solvent,
b) about 2 to 15 wt.% of dispersed pigment,
c) about 0.05 to 25 wt.% of one or more phospholipids in the form of a lecithin fraction and
d) about 5 to 25 wt.% of dispersing agent.

7. Inkjet ink according to claim 1, **characterised in that** it contains about 1 to 35 wt.%, especially about 5 to 30 wt.%, of one or more phospholipids in the form of a lecithin fraction.

8. Inkjet ink according to claim 1 or 9, **characterised in that** it contains the following, relative to the total quantity of solvent, dispersed pigment and phospholipid in the ink:
a) about 50 to 97 wt.% of solvent containing at least 80% of a covalent non-aqueous solvent,
b) about 2 to 20 wt.% of pigment and
c) about 1 to 35 wt.% of one or more phospholipids in the form of a lecithin fraction.

## Revendications

1. Encre d'impression par jet d'encre, contenant
(a) un solvant qui contient au moins 80 % d'un solvant non aqueux non polaire,
(b) un pigment dispersé dans le solvant, et
(c) un ou plusieurs phospholipides sous forme d'une fraction de lécithine enrichie en phospholipide.

2. Encre d'impression par jet d'encre suivant la revendication 1, **caractérisée** ce qu'elle contient un agent dispersant.

3. Encre d'impression par jet d'encre suivant la revendication 1 ou 2, **caractérisée en ce que** le phospholipide est présent en une quantité d'environ 0,05 à 25 % en poids, par rapport à la quantité totale d'encre, notamment en une quantité d'environ 0,1 à 20 % en poids.

4. Encre d'impression par jet d'encre suivant la revendication 3, **caractérisée en ce que** le phospholipide est présent en une quantité d'environ 0,5 à 15 % en poids.

5. Encre d'impression par jet d'encre suivant au moins l'une des revendications 2 à 4 précédentes, **caractérisée en ce que** l'agent dispersant est présent sous forme d'un copolymère de vinylpyrrolidone et d'une ou plusieurs alpha-oléfines à longue chaîne ayant au moins 6 atomes de carbone, en particulier 6 à 24 atomes de carbone.

6. Encre d'impression par jet d'encre suivant au moins l'une des revendications 2 à 5 précédentes, **caractérisée en ce qu'**elle contient, par rapport à la quantité totale présente de solvant, d'agent dispersant, de pigment dispersé et d'un ou plusieurs phospholipides :
a) environ 60 à 90 % en poids de solvant qui contient au moins 80 % d'un solvant non aqueux non polaire,
b) environ 2 à 15 % en poids de pigment dispersé,
c) environ 0,05 à 25 % en poids d'un ou plusieurs phospholipides sous forme d'une fraction de lécithine, et
d) environ 5 à 25 % en poids d'agent dispersant.

7. Encre d'impression par jet d'encre suivant la revendication 1, **caractérisée en ce qu'**elle contient environ 1 à 35 % en poids, notamment environ 5 à 30 % en poids, d'un ou plusieurs phospholipides sous forme d'une fraction de lécithine.

8. Encre d'impression par jet d'encre suivant la revendication 1 ou 9, **caractérisée en ce qu'**elle contient, par rapport à la quantité totale présente de solvant, de pigment dispersé et de phospholipide :
(a) environ 50 à 97 % en poids de solvant qui contient au moins 80 % d'un solvant non aqueux non polaire,
(b) environ 2 à 20 % en poids de pigment, et
(c) environ 1 à 35 % en poids d'un ou plusieurs phospholipides sous forme d'une fraction de lécithine.
